# EUROPEAN PATENT APPLICATION

(11) **EP 4 575 777 A1**
(43) Date of publication of application: **25.06.2025**
(21) Application number: 23854318.5
(22) Date of filing: 10.08.2023
(51) Int. Cl.: G06F 9/455, B60W 50/00

(54) **DRIVING SYSTEM AND CONSTRUCTION METHOD THEREFOR, VEHICLE AND STORAGE MEDIUM**

(30) Priority: 16.08.2022 CN 202210980734
(71) Applicant: Nio Technology (Anhui) Co., Ltd, Hefei City, Anhui 230601 (CN)
(72) Inventor: LUO, Jinhua, Hefei, Anhui 230601 (CN)
(74) Representative: Vossius & Partner Patentanwälte Rechtsanwälte mbB
(86) International application number: PCT/CN2023/112247
(87) International publication number: WO 2024/037417

(57) **Abstract**

The present application relates to a driving system and a method for constructing the same, a vehicle, and a storage medium. The system includes: a hypervisor deployed on a processor; a virtual machine deployed on the hypervisor; a driving module deployed on the virtual machine; and a device driver module deployed on the hypervisor, where the driving module accesses peripherals via the device driver module.

## Description

### Technical Field

The present application relates to a driving system for a vehicle and, in particular, to a driving system and a method for constructing the same, a vehicle, and a storage medium.

### Background Art

At present, in the field of autonomous driving, an increasing number of manufacturers are opting to use the Linux system as the operating system for hosting autonomous driving modules. This is because the Linux ecosystem offers a wealth of open-source resources that can be utilized, such as deep learning frameworks, open-source modules for visual recognition, among others. However, because Linux system inherently cannot achieve high levels of reliability, many manufacturers continue to use commercial microkernel operating systems, such as the QNX system. Therefore, how to leverage the open-source ecosystem resources of the Linux system while achieving high levels of reliability has become a direction of research in the industry.

In view of this, there is a need for an improved system architecture.

### Summary

Embodiments of the present application provide a driving system and a method for constructing the same, a vehicle, and a storage medium, which are configured to construct drivers for autonomous driving applications with a high level of reliability.

According to an aspect of the present application, a driving system is provided. The system includes: a hypervisor deployed on a processor; a virtual machine deployed on the hypervisor; a driving module deployed on the virtual machine; and a device driver module deployed on the hypervisor, where the driving module accesses peripherals via the device driver module.

In some embodiments of the present application, the hypervisor is based on a microkernel system.

In some embodiments of the present application, the hypervisor is based on an sel4 system or a QNX system.

In some embodiments of the present application, the virtual machine is based on a Linux system.

In some embodiments of the present application, the driving module is configured to perform autonomous/assisted driving tasks.

In some embodiments of the present application, the system further includes a functional framework deployed on the virtual machine, and the driving module is configured to invoke the functional framework.

According to another aspect of the present application, a vehicle is provided. The vehicle includes any driving system as described above.

According to another aspect of the present application, a method for constructing a driving system is provided. The method includes the following steps: deploying a hypervisor on a processor; deploying a virtual machine and a device driver module on the hypervisor; and deploying a driving module on the virtual machine, where the driving module accesses peripherals via the device driver module.

In some embodiments of the present application, the hypervisor is based on a microkernel system.

In some embodiments of the present application, the hypervisor is based on an sel4 system or a QNX system.

In some embodiments of the present application, the virtual machine is based on a Linux system.

In some embodiments of the present application, the driving module is configured to perform autonomous/assisted driving tasks.

In some embodiments of the present application, the method further includes: deploying a functional framework on the virtual machine, and the driving module is configured to invoke the functional framework.

According to another aspect of the present application, there is provided a computer-readable storage medium having instructions stored therein, characterized in that the instructions, when executed by a processor, cause the processor to perform any one of the methods described above.

The driving system and the method for constructing the same, the vehicle, and the storage medium provided in some embodiments of the present application can construct drivers for autonomous driving applications with a high level of reliability. This avoids malfunction of the entire system caused by a failure of a single module, thereby enhancing the safety of the vehicle.

### Brief Description of the Drawings

The above and other objectives and advantages of the present application will be more thorough and clearer from the following detailed description in conjunction with the drawings, where the same or similar elements are represented by the same reference numerals.
FIG. 1 illustrates a driving system according to an embodiment of the present application;
FIG. 2 illustrates a method for constructing a driving system according to an embodiment of the present application; and
FIG. 3 illustrates a driving system according to some other embodiments.

### Detailed Description of Embodiments

For brevity and illustrative purposes, the details of the present application are mainly described herein with reference to its exemplary embodiments. However, those skilled in the art will readily realize that various embodiments disclosed herein may be equivalently applied or directed to any driving systems, methods for constructing the same, vehicles, and storage media, and it is evident that various modifications and changes may be made thereto without departing from the broad spirit and scope of the disclosure.

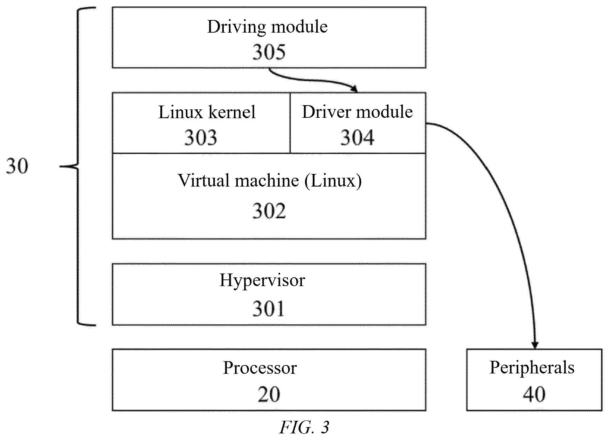

FIG. 3 illustrates an architecture design of an (autonomous) driving system 30 based on a Linux system. For the purpose of clearly demonstrating the details of the present disclosure, the figure also illustrates peripheral modules such as a processor and peripherals. As shown, in the driving system 30, a hypervisor 301 is deployed based on a processor 20 (e.g., a system on chip (SOC)); a Linux virtual machine 302 is deployed on the hypervisor 301; and a device driver module 304 is deployed within the space of a Linux kernel 303, and a driving module 305 is also deployed on the Linux virtual machine 302. As shown, the driving module 305 can access peripherals 40 via the device driver module 304. However, there is a problem with this architecture: If a device driver within the device driver module 304 malfunctions, it may cause the entire Linux virtual machine 302 to crash, subsequently affecting the (autonomous) driving module 305 in the user space. This is unacceptable for vehicle driving applications, which have extremely high safety requirements.

In view of this, a driving system architecture suitable for autonomous driving applications is provided herein. This architecture can use Linux as the operating system kernel, thereby enabling the use of the extensive open-source ecosystem resources based on Linux, while fulfilling the needs for high reliability.

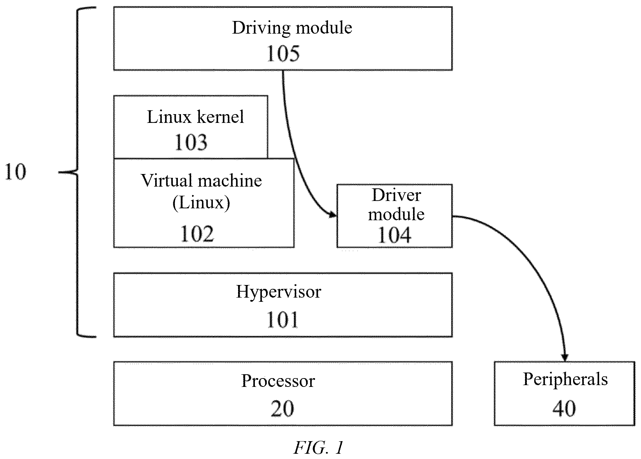

According to an aspect of the present application, a driving system is provided. As shown in FIG. 1, in addition to a driving system 10 (hereinafter referred to as the system 10), peripheral modules such as a processor 20 and peripherals 40 are shown. The system 10 includes the following hierarchical architecture: a hypervisor 101 deployed on the processor 20, a virtual machine 102 (including a kernel 103) and a device driver module 104 deployed on the hypervisor 101, and a driving module 105 deployed on the virtual machine 102. The driving module 105 accesses the peripherals via the device driver module 104. According to the structure of the system 10, the device driver module 104 is no longer deployed on the virtual machine 102, thereby preventing a failure of a single driver from causing malfunction of the entire virtual machine 102.

In some embodiments of the present application, the hypervisor 101 is based on a microkernel system. Specifically, the hypervisor 101 can be based on an sel4 system or a QNX system.

A hypervisor, like an operating system for operating systems, can be used to manage a plurality of virtual machines. In the automotive field, it is observed that hypervisors may, in the future, take complete control of various hardware resources within vehicles, abstract them into logical resource pools, and allocate them to each virtual machine as needed.

In addition, a microkernel system is a stripped-down version of an operating system where only essential functions for the operating system to function are provided in a minimalistic kernel. These essential functions include basic tasks scheduling, threads management, inter-process communication (IPC), memory management, etc. All operating system services run in the user space, and are handled in the same way as any other program. Since each service runs in its own address space, these services are protected from one another.

Due to the architecture of the microkernel, a microkernel system possesses the following advantages, making it particularly suitable for implementing vehicle autonomous driving applications: It enables the coexistence of different APIs, file systems, and even characteristics of different operating systems in a single system. The microkernel system is highly flexible. When running an application, only the selected system services need to be loaded into the system. Additionally, after the services are modified, testing can be performed in an online manner; there is no need to reconstruct or boot a new kernel , thereby not affecting the functioning of the system.

Furthermore, both the sel4 system and the QNX system share the advantages of general microkernel systems, making them suitable for applications such as autonomous driving. Among them, sel4 is a member of the L4 microkernel family. It provides the highest level of assurance for isolation between applications running in the system, preventing the failure of malicious behavior of one part of the system from affecting other potentially more critical parts of the system. seL4 is the first operating system kernel in the world that has been mathematically proven to be secure, and it emphasizes high performance on top of its security foundation. The QNX operating system is a distributed real-time operating system. This operating system can run in hardware environments with CPUs such as Intel X86 and Pentium as the cores, as well as in those with CPUs like PowerPC and MIPS as the cores. The QNX operating system adheres to the POSIX basic standards and real-time standards, making it convenient to achieve portability of its applications.

In some embodiments of the present application, the virtual machine 102 is based on a Linux system. In some embodiments of the present application, the system further includes a functional framework deployed on the virtual machine 102, and the driving module 105 is configured to invoke the functional framework. At present, functional frameworks for autonomous/assisted driving, such as deep learning frameworks (e.g., Pytorch) and open-source modules for visual recognition, are generally developed based on the Linux system. Therefore, in order to utilize such open-source resources, the virtual machine 102 in the present application can be a Linux virtual machine. This will significantly reduce the development cost and development cycle of autonomous/assisted driving for vehicles. Of course, the Linux virtual machine here can also be a Linux system with trimmed functions.

In some embodiments of the present application, the driving module 105 is configured to perform autonomous/assisted driving tasks. Due to these advantages of the system 10 as described above, the driving module 105 is configured to invoke specific drivers in the driver module 104 when performing autonomous/assisted driving tasks, in order to access the peripherals 40. Even if some of the drivers in the driver module 104 malfunction, the functioning of the entire system is not affected.

In addition, although not shown in the figure, the peripherals 40 for autonomous driving/assisted driving may include various types of environmental detection sensors such as cameras and LiDARs. Furthermore, the peripherals 40 may also include input devices, such as touch screens for human-machine interactions, audio systems for sound output, and various types of mechanical components for performing steering, braking, and acceleration, or the like.

According to another aspect of the present application, a vehicle is provided, where the vehicle includes any one of the driving systems described above. The present application does not limit the layout of the vehicle (for example, a wheeled vehicle, a tracked vehicle, etc.), nor does it limit the driving force of the vehicle (for example, electric motor-driven vehicles, gasoline engine-driven vehicles, etc.), and the vehicle in the present application covers various vehicles currently known in the field as well as vehicles to be developed in the future. The driving system can be hosted on an in-vehicle platform or implemented as the in-vehicle platform itself, and the computing power and hardware resources provided by the in-vehicle platform can be used to build the various modules of the system.

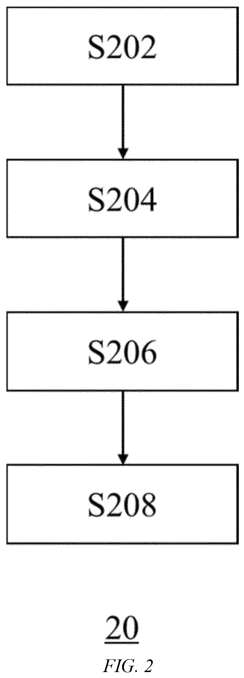

According to another aspect of the present application, a method for constructing a driving system is provided. As shown in FIG. 2, a method 20 for constructing a driving system (hereinafter briefly referred to as the method 20) includes the following steps: in step S202, a hypervisor is deployed on a processor; in step S204, a virtual machine and a device driver module are deployed on the hypervisor; and in step S206, a driving module is deployed on the virtual machine, where the driving module accesses peripherals via the device driver module. In the driving system constructed according to the method 20, the device driver module is no longer deployed on the virtual machine, thereby preventing a failure of a single driver from causing malfunction of the entire virtual machine.

It should be noted that the ordering of steps shown in FIG. 2 is merely illustrative. During the process of constructing a driving system using the method 20, the ordering of many of the described steps may be changed, such as steps may be performed simultaneously (in parallel) or in another order, without affecting the scope or operation of the disclosure..

In some embodiments of the present application, the hypervisor is based on a microkernel system. Specifically, the hypervisor is based on an sel4 system or a QNX system. A microkernel system is a stripped-down version of an operating system where only essential functions for the operating system to function are provided in a minimalistic kernel. These essential functions include basic tasks scheduling, threads management, inter-process communication (IPC), and memory management, etc. Both the sel4 system and the QNX system share the advantages of general microkernel systems, making them suitable for applications such as autonomous driving. Among them, sel4 is a member of the L4 microkernel family. It provides the highest level of assurance for isolation between applications running in the system, preventing the failure of malicious behavior of one part of the system from affecting other potentially more critical parts of the system. seL4 is the first operating system kernel in the world that has been mathematically proven to be secure, and it emphasizes high performance on top of its security foundation. The QNX operating system is a distributed real-time operating system. This operating system can run in hardware environments with CPUs such as Intel X86 and Pentium as the cores, as well as in those with CPUs like PowerPC and MIPS as the cores. The QNX operating system adheres to the POSIX basic standards and real-time standards, making it convenient to achieve portability of its applications.

In some embodiments of the present application, with continued reference to FIG. 2, the method 20 further includes the following step: deploying a functional framework on the virtual machine, and the driving module is configured to invoke the functional framework. In some embodiments of the present application, the virtual machine is based on a Linux system. At present, functional frameworks for autonomous/assisted driving, such as deep learning frameworks and open-source modules for visual recognition, are generally developed based on the Linux system. Therefore, in order to utilize such open-source resources, the virtual machine 102 in the present application can be a Linux virtual machine. Of course, the Linux virtual machine here can also be a system with trimmed functions.

In some embodiments of the present application, the driving module is configured to perform autonomous/assisted driving tasks. Since the driving system constructed by the method 20 possesses these advantages as described above, the driving module is configured to invoke specific drivers in the driver module when performing autonomous/assisted driving tasks, in order to access the peripherals. Even if some of the drivers in the driver module malfunctions, the process operation of the entire system is not affected.

Other aspects of the method 20 can be carried out with reference to the corresponding content of the system 10 described above, and the relevant content is incorporated herein by reference. Due to space limitations, it will not be reiterated here.

According to another aspect of the present application, there is provided a computer-readable storage medium having instructions stored therein, where the instructions, when executed by a processor, cause the processor to perform any one of the methods for constructing a driving system as described above. The computer-readable medium in the present application includes various types of computer storage media, and may be any usable medium accessible to a general-purpose or special-purpose computer. For example, the computer-readable medium may include a RAM, a ROM, an EPROM, an E²PROM, a register, a hard disk, a removable hard disk, a CD-ROM or another optical memory, a magnetic disk memory or another magnetic storage device, or any other transitory or non-transitory media that can carry or store expected program code having an instruction or data structure form and be accessible to the general-purpose or special-purpose computer or a general-purpose or special-purpose processor. Data is usually copied magnetically in a disk used herein, while data is usually copied optically by using lasers in a disc. A combination thereof shall also fall within the scope of protection of the computer-readable media. An exemplary storage medium is coupled to a processor, so that the processor can read information from and write information to the storage medium. In an alternative solution, the storage medium may be integrated into the processor. The processor and the storage medium may reside in an ASIC. The ASIC may reside in a user terminal. In an alternative solution, the processor and the storage medium may reside as discrete assemblies in a user terminal.

As introduced above, the conventional approach in the industry is to place device drivers in the Linux kernel space. This approach could cause the entire system to crash if one of the device drivers malfunctions. According to some of the above embodiments, the driving system can deploy an sel4 as a hypervisor based on SoC, where sel4 is a microkernel that has been formally verified to be free of security-related bugs. In addition, a Linux virtual machine is deployed on sel4, with device drivers deployed in sel4 user processes. If a device driver malfunctions, only the user process on which the device driver is deployed crashes, without causing the entire system to crash, thereby achieving fault isolation and greatly enhancing the reliability of the entire system. Autonomous driving software accesses the peripherals through device drivers on sel4.

The foregoing descriptions are merely the implementations of the present application, but are not intended to limit the scope of protection of the present application. Any feasible variation or replacement conceived by a person skilled in the art within the technical scope disclosed in the present application shall fall within the scope of protection of the present application. Without conflicts, the implementations of the present application and features in the implementations may also be combined with each other. The scope of protection of the present application shall be subject to recitations of the claims.

## Claims

1. A driving system, **characterized by** comprising:
a hypervisor deployed on a processor;
a virtual machine deployed on the hypervisor;
a driving module deployed on the virtual machine; and
a device driver module deployed on the hypervisor, wherein the driving module accesses peripherals via the device driver module.

2. The system according to claim 1, **characterized in that** the hypervisor is based on a microkernel system.

3. The system according to claim 2, **characterized in that** the hypervisor is based on an sel4 system or a QNX system.

4. The system according to claim 1, **characterized in that** the virtual machine is based on a Linux system.

5. The system according to claim 4, **characterized in that** the driving module is configured to perform autonomous/assisted driving tasks.

6. The system according to claim 5, **characterized in that** the system further comprises a functional framework deployed on the virtual machine, and the driving module is configured to invoke the functional framework.

7. A vehicle, **characterized in that** the vehicle comprises the driving system according to any one of claims 1 to 6.

8. A method for constructing a driving system, **characterized by** comprising:
deploying a hypervisor on a processor;
deploying a virtual machine and a device driver module on the hypervisor; and
deploying a driving module on the virtual machine, wherein the driving module accesses peripherals via the device driver module.

9. The method according to claim 8, **characterized in that** the hypervisor is based on a microkernel system.

10. The method according to claim 9, **characterized in that** the hypervisor is based on an sel4 system or a QNX system.

11. The method according to claim 8, **characterized in that** the virtual machine is based on a Linux system.

12. The method according to claim 11, **characterized in that** the driving module is configured to perform autonomous/assisted driving tasks.

13. The method according to claim 12, **characterized in that** the method further comprises:
deploying a functional framework on the virtual machine, and the driving module is configured to invoke the functional framework.

14. A computer-readable storage medium having stored therein instructions, **characterized in that** the instructions, when executed by a processor, cause the processor to perform the method according to any one of claims 8 to 13.
